# EUROPÄISCHE PATENTSCHRIFT

(11) **EP 1 946 876 B1**
(45) Veröffentlichungstag und Bekanntmachung des Hinweises auf die Patenterteilung: **12.01.2011**
(21) Anmeldenummer: 07450245.1
(22) Anmeldetag: 27.12.2007
(51) Int. Cl.: B23K 7/10, B23K 37/08, B22D 11/126, B23B 5/16, B23D 79/02

(54) **Vorrichtung zum Entgraten eines durch ein Brennschneiden abgelängten Metallstranges mit Hobelwerkzeugen**
Method for deburring a metal strip cross cut by flame cutting with smoothing plane tools
Dispositif d'ébavurage d'un tronçon métallique coupé en longueur par oxycoupage à l'aide d'outils de rabotage

(30) Priorität: 17.01.2007 AT 832007
(43) Veröffentlichungstag der Anmeldung: 23.07.2008
(73) Patentinhaber: Framag Industrieanlagenbau GmbH, 4873 Frankenburg (AT)
(72) Erfinder: Engel, Hans-Jürgen, Dipl.-Ing., 47239 Duisburg (DE); Maly, Wolfgang, Dipl.-Ing., 4840 Vöcklabruck (AT)
(74) Vertreter: Hübscher, Helmut

(56) Entgegenhaltungen:
- EP-A1- 0 671 230
- DE-A1- 4 119 071
- JP-A- 2002 307 229
- US-A- 4 799 300
- US-A- 4 961 334

## Beschreibung

Die Erfindung bezieht sich auf eine Vorrichtung zum Entgraten eines durch ein Brennschneiden abgelängten Metallstranges gemäß dem Oberbegriff des Anspruchs 1 (siche , z.B., EP 0 671 230 A1).

Beim Ablängen von beispielsweise durch ein Stranggießen hergestellten Metallsträngen durch ein Brennschneiden entsteht auf der Austrittsseite des Brennstrahles ein Schneidgrat, der bei der Weiterverarbeitung der abgelängten Metallstränge stört und daher entfernt wird. Zu diesem Zweck ist es bei Brammen, also bei Metallsträngen mit einem im wesentlichen rechtwinkeligen Querschnitt, bekannt (DE 30 37 320 C2), auf einem in Längsrichtung der Bramme verfahrbaren Wagen mehrere Hobelwerkzeuge quer zur Brammenlängsrichtung anzuordnen und je für sich an die den Schneidgrat aufweisende Unterseite der Bramme anzustellen, um nach der Anstellung der Hobelwerkzeuge an die Bramme außerhalb des Schneidgrates den Wagen durch einen Vorschubantrieb zu beaufschlagen und den Schneidgrat entsprechend der Anstellung der Hobelwerkzeuge spanabhebend abzutragen. Der Einsatz dieser bekannten Vorrichtung zum Entgraten von Brammen eignet sich jedoch nicht für das Entgraten von Knüppeln, die sich durch das Ablängen von Metallsträngen mit rundem Querschnitt ergeben.

Bei einer anderen bekannten Vorrichtung zum Entgraten eines durch ein Brennschneiden abgelängten Metallstranges (EP 0 671 230 A1) sind die Hobelwerkzeuge auf Kolbenkörpern vorgesehen, die in einem gemeinsamen rohrförmigen Zylinderkörper radial verschiebbar gelagert und mit Hilfe von Druckluft beaufschlagbar sind, um ein Anstellen der Hobelwerkzeuge an den Metallstrang unter einer vorgegebenen Kraft sicherzustellen. Die Anstellung der Hobelwerkzeuge erfolgt dabei über eine radiale Verlagerung des parallel zur Strangachse verlaufenden Zylinderkörpers, wobei beim Anschlagen der Hobelwerkzeuge am Metallstrang diese aus einer anschlagbegrenzten Ausgangsstellung gegen den Beaufschlagungsdruck in den Zylinderkörper eingeschoben werden. Durch eine Anpassung des hohlen Zylinderkörpers an eine Umfangsfläche eines im Querschnitt runden Knüppels, beispielsweise durch einen gegenüber der Knüppelachse schraubenförmigen Verlauf des Zylinderkörpers, gelingt es auch im Querschnitt runde Knüppel zu entgraten, und zwar für mehrere benachbarte Durchmessergrößen, wenn die einzelnen Kolbenkörper in Umfangsrichtung gegeneinander versetzt axial hintereinander angeordnet werden. Nachteilig ist allerdings der Konstruktionsaufwand zufolge der notwendigen Anstellung des Zylinderkörpers, insbesondere wenn zwei einander bezüglich des zu entgratenden Knüppels gegenüberliegende Zylinderkörper vorgesehen werden müssen. Trotz des Vorsehens von zwei Zylinderkörpern mit je einem Satz von Hobelwerkzeuge tragenden Kolbenkörpern gelingt es nicht, eine über den Umfang gleichmäßige Bearbeitung der Knüppel zu erreichen.

Der Erfindung liegt somit die Aufgabe zugrunde, eine Vorrichtung zum Entgraten eines durch ein Brennschneiden abgelängten Metallstranges so auszugestalten, dass sich für das Abtragen des Schneidgrates abgelängter Metallstränge mit rundem Querschnitt vorteilhafte Konstruktionsbedingungen

Eine Vorrichtung gemäß der Erfindung ist im Anspruch 1 definiert.

Das Vorsehen von zwei Sätzen von gegeneinander auf Lücke versetzten Hobelwerkzeugen, die radial gegenüber dem abgelängten Metallstrang verstellt werden können, bietet eine einfache Möglichkeit, abgelängte Metallstränge unterschiedlichen Durchmessers vollständig entgraten zu können, weil durch die gegenseitige Versetzung der in Längsrichtung des Metallstranges hintereinander angeordneten Hobelwerkzeugsätze bei einer entsprechenden Überlappung der gegeneinander versetzten Hobelwerkzeuge sich eine über den Umfang schließende Schnittfolge der einzelnen Hobelwerkzeuge bei unterschiedlichen Strangdurchmessern einstellt. Voraussetzung hierfür ist allerrings eine den zu entgratenden Metallstrang umschließende, ringförmige Halterung für die Hobelwerkzeuge, die gegenüber der unverstellbaren Halterung je für sich radial zum abgelängten Metallstrang verstellt werden können. Die radialen Werkzeugsätze stellen darüber hinaus auch ohne Kenntnis der Umfangslage des Schneidgrates eine vorteilhafte Voraussetzung für eine vollständige Entgratung des abgelängten Metallstranges dar. Die Hobelwerkzeuge der Werkzeugsätze müssen zu diesem Zweck ja bloß über den gesamten Umfang verteilt werden.

Der Vorschub zum Entgraten des abgelängten Metallstranges kann durch ein Verfahren der Halterung gegenüber dem ortsfest festgehaltenen Metallstrang erreicht werden. Gemäß der Erfindung wust der Vorschubantrieb einen in Richtung des Metallstranges verlaufenden, an der Stirnseite des zu entgratenden Endes des abgelängten Metallstranges angreifenden Stempel für den durch die ringförmige Halterung an den Stempel anschlagenden, abgelängten Metallstrang auf. Der Stempel bewegt bei einer entsprechenden Beaufschlagung den Metallstrang gegenüber den radial an den Metallstrang angestellten Hobelwerkzeugen unter einem Abtragen des Schneidgrates durch die ringförmige Halterung. Es bedarf daher keines zusätzlichen schneidgerechten Festhaltens des abgelängten Metallstranges und keines Antriebs der Halterung. Der für die An- und Abförderung der zu entgratenden Metallstränge ohnehin vorzusehende Rollgang kann somit in vorteilhafter Weise als Führung des Metallstranges während der Vorschubbewegung durch den Stempel genützt werden.

Wird der Stempel mit Hilfe eines Stellzylinders beaufschlagt, so kann dieser Stempel auch als Bremsanschlag für die über den Rollgang angeförderten Metallstränge dienen, die mit ihrem zu entgratenden Ende durch die ringförmige Halterung gegen den Stempel gefördert und durch diesem abgebremst werden, um nach dem Anstellen der Hobelwerkzeuge an den jeweiligen Metallstrang außerhalb dessen Schneidgrat den Metallstrang mit Hilfe des Stempels gegensinnig zur Anförderung einem Entgratungsvorschub zu unterwerfen und wieder aus der Vorrichtung auszustoßen.

Besonders einfache Konstruktionsverhältnisse ergeben sich hinsichtlich der Anordnung der Hobelwerkzeuge, wenn die Halterung wenigstens zwei Halterungsringe für je einen Satz von Hobelwerkzeugen aufweist, weil in diesem Fall die Halterungsringe mit den Hobelwerkzeugen übereinstimmend ausgebildet werden können. Es ist lediglich für eine entsprechende Winkelversetzung der Halterungsringe zu sorgen, um einen in Umfangsrichtung geschlossenen Kranz von Hobelwerkzeugen zu erhalten. Bei zwei Halterungsringen entspricht bei einer gleichmäßigen Verteilung der Hobelwerkzeuge der Versetzungswinkel zwischen den beiden Halterungsringen dem halben Winkelabstand zwischen zwei benachbarten Hobelwerkzeugen eines Hobelwerkzeugsatzes. Mit der Anzahl der Halterungsringe verringert sich der Versetzungswinkel entsprechend.

Zur gegenseitigen Festlegung der Halterungsringe kann eine axiale Spanneinrichtung vorgesehen werden, die die Halterungsringe an einem Widerlager festklemmt. Gehört dieses Widerlager einem der Höhe nach in einem Gestell verlagerbaren Schlitten an, so kann in einfacher Weise durch eine Verlagerung des Schlittens die Vorrichtung an unterschiedliche Durchmesser der auf einem ortsfesten Rollgang geförderten Metallstränge angepasst werden. Die Ausrichtung der Halterungsringe gegenüber der Strangachse, die sich wegen der ortsfesten Strangauflage mit dem Strangdurchmesser der Höhe nach verlagert, braucht ja wegen der Einzelanstellung der Hobelwerkzeuge nicht besonders genau zu sein.

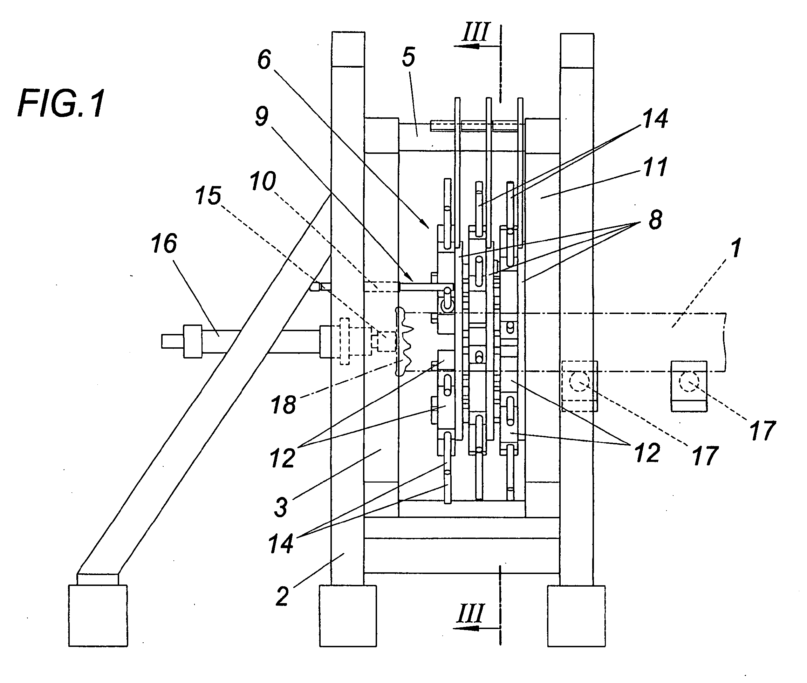

In der Zeichnung ist der Erfindungsgegenstand beispielsweise dargestellt. Es zeigen
- Fig. 1: eine erfindungsgemäße Vorrichtung zum Entgraten eines abgelängten Metallstranges in einer vereinfachten Seitenansicht,

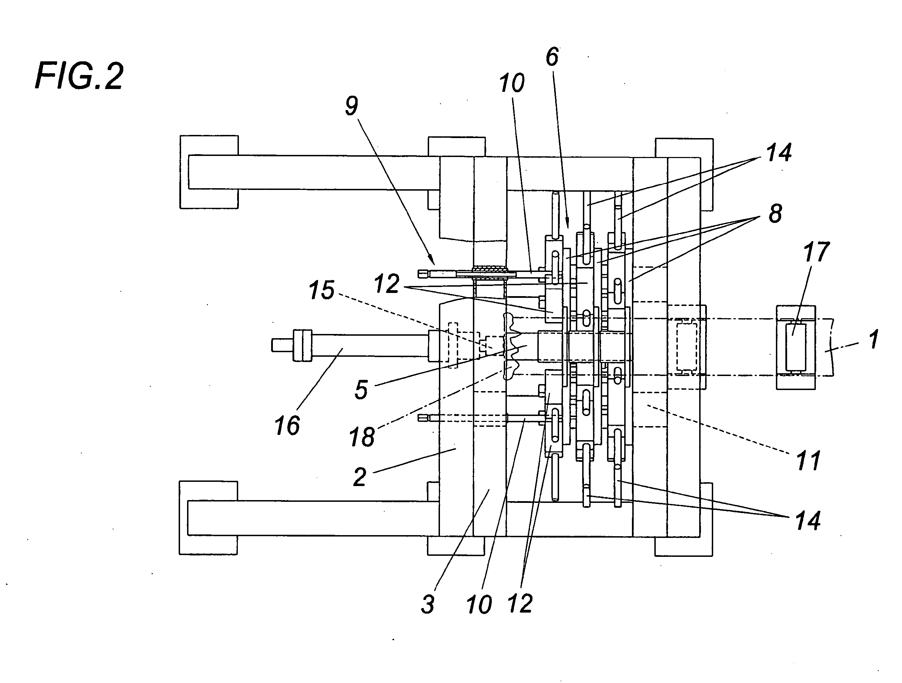

- Fig. 2: diese Vorrichtung in einer zum Teil aufgerissenen Draufsicht,

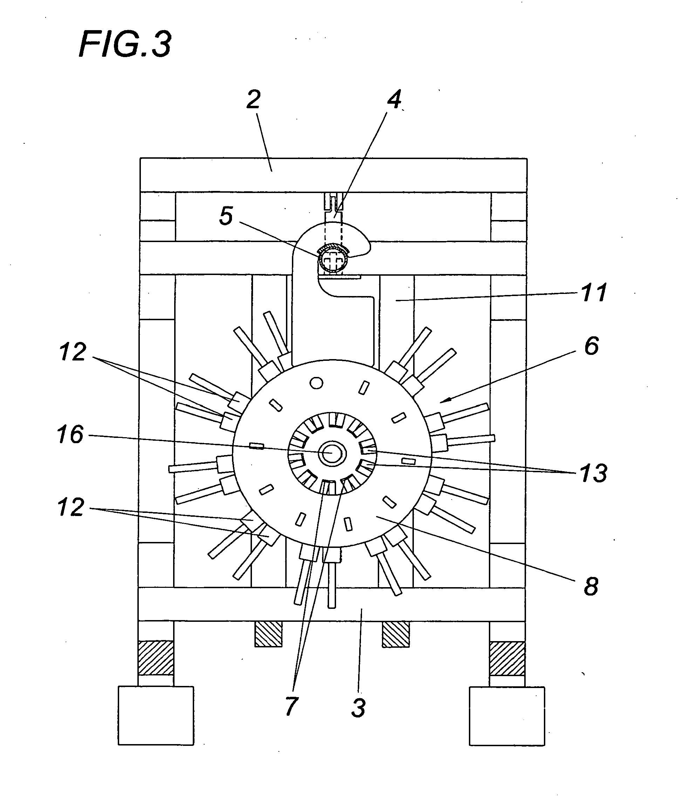

- Fig. 3: einen Schnitt nach der Linie III-III der Fig. 1 und

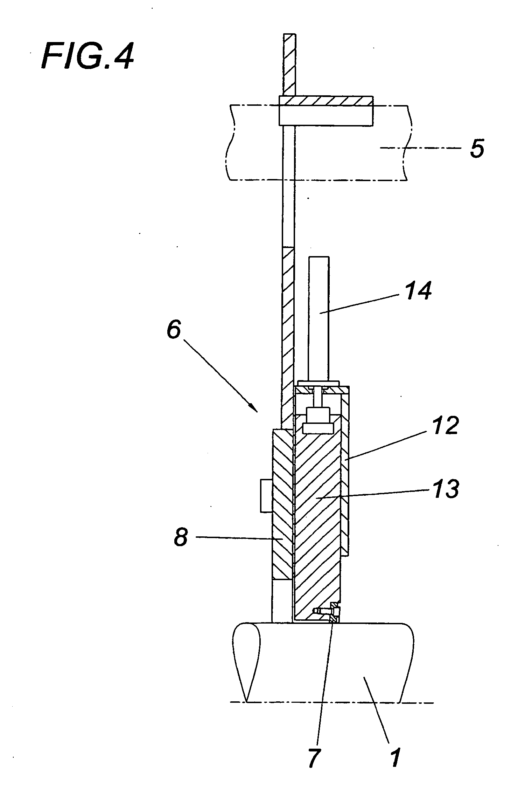

- Fig. 4: einen Haltering ausschnittsweise im Bereich eines Hobelwerkzeuges in einem Axialschnitt in einem größeren Maßstab.

Die dargestellte Vorrichtung zum Entgraten eines durch ein Brennschneiden abgelängten Metallstranges 1 weist ein Gestell 2 auf, in dem ein Schlitten 3 mit Hilfe von Hubzylindern 4 der Höhe nach verlagert werden kann. Der Schlitten 3 bildet ein Tragrohr 5, auf dem eine Halterung 6 für Hobelwerkzeuge 7 aufgehängt ist. Diese Halterung 6 ist im dargestellten Ausführungsbeispiel aus drei Halterungsringen 8 zusammengesetzt, die in Längsrichtung des abgelängten Metallstranges 1 hintereinander angeordnet sind und mit Hilfe einer Spanneinrichtung 9, beispielsweise in Form von Schraubentrieben 10, an einem Widerlager 11 des Schlittens 3 axial festgeklemmt werden können. Die je für sich auf dem Tragrohr 5 aufhängbaren Halterungsringe 8 sind mit über den Umfang gleichmäßig verteilten radialen Führungen 12 für die Hobelwerkzeuge 7 versehen, deren in den Führungen 12 verschiebbar gelagerte Träger 13 mit Hilfe von Stelltrieben 14 zum Anstellen der Hobelwerkzeuge 7 an den zu bearbeitenden Metallstrang 1, beispielsweise mit Hilfe von Stellzylindern, verlagert werden können. Die Anordnung ist dabei so getroffen, dass die übereinstimmend ausgebildeten Halterungsringe 8 gegeneinander winkelversetzt angeordnet sind, so dass sich für die jedem Halterungsring 8 zugeordneten Sätze von Hobelwerkzeugen 7 eine Versetzung auf Lücke ergibt, um insgesamt einen über den Umfang geschlossenen Kranz von Hobelwerkzeugen 7 zu erhalten. Da im Ausführungsbeispiel drei Halterungsringe 8 vorgesehen sind, bedeutet dies, dass die einzelnen Halterungsringe 8 gegeneinander um einen Winkel versetzt werden müssen, der einem Drittel des Winkelabstandes zweier benachbarter Hobelwerkzeuge 7 eines Halterungsringes 8 entspricht.

Neben der Halterung 6 für die radial verstellbaren Hobelwerkzeuge 7 trägt der Schlitten 3 außerdem einen an der Stirnseite des Metallstranges 1 anschlagenden Stempel 15, der mit Hilfe eines Stellzylinders 16 gemäß der Erfindung beaufschlagt werden kann. Die Zuordnung ist dabei so gewählt, dass der koaxial zu den Halterungsringen 8 verlaufende Stempel 15 mit Hilfe des Stellzylinders 16 durch die Halterungsringe 8 hindurch verlagert wird, um den stirnseitig am Stempel 15 anliegenden Metallstrang 1 auf einem Rollgang 17 zum Entgraten einer entsprechenden Vorschubbewegung unterwerfen zu können.

Um einen abgelängten Metallstrang 1 in Form eines Knüppels mit rundem Querschnitt zu entgraten, wird der Metallstrang 1 über den Rollgang 17 angefördert, wobei durch eine Höhenverlagerung des Schlittens 3 eine Anpassung der Vorrichtung an den jeweiligen Durchmesser des Metallstranges 1 erfolgt. Der zur Halterung 6 koaxiale Stempel 15 wird dabei zumindest angenähert gegenüber der Strangachse ausgerichtet. Der über den Stellzylinder 16 gegen den ankommenden Metallstrang 1 vorgeschobene Stempel 15 kann außerdem vorteilhaft als Bremsanschlag dienen, um den Metallstrang 1 so abzubremsen, dass das zu entgratende, am Stempel 15 anschlagende Ende 18 durch die ringförmige Halterung 6 vorragt, wie dies in der Zeichnung dargestellt ist. In dieser Stellung des Metallstranges 1 liegen die Hobelwerkzeuge 7 axial außerhalb des abzutragenden Schneidgratbereiches. Mit der radialen Anstellung der Hobelwerkzeuge 7 über die Stelltriebe 14 wird die jeweilige Umrissform des Metallstranges 1 erfasst und nachgebildet, so dass entsprechend dieser Umrissform die Entgratung erfolgen kann. Zu diesem Zweck wird gemäß der Erfindung der Stellzylinder 16 für den Stempel 15 als Vorschubantrieb mit der Folge beaufschlagt, dass der Metallstrang 1 durch den Stempel 15 gegensinnig zur Einlaufrichtung aus der Vorrichtung ausgeschoben wird, wobei der Schneidgrat in einem Ausmaß abgetragen wird, das dem durch die Anstellung der Hobelwerkzeuge 7 bestimmten Übermaß entspricht.

## Patentansprüche

1. Vorrichtung zum Entgraten eines durch ein Brennschneiden abgelängten Metallstranges (1) mit Hobelwerkzeugen (7), die in einer Halterung (6) je für sich quer zum Metallstrang (1) verstellbar gelagert sind, und mit einem Antrieb zur relativen Vorschubbewegung der Hobelwerkzeuge (7) gegenüber dem abgelängten Metallstrang (1), **dadurch gekennzeichnet, dass** die ringförmige Halterung (6) zumindest zwei in Längsrichtung des abgelängten Metallstranges (1) hintereinander angeordnete Sätze von radial zum abgelängten Metallstrang (1) verstellbaren Hobelwerkzeugen (7) umfasst, die satzweise gegeneinander auf Lücke versetzt sind, und dass die Vorrichtung einen Vorschubantreib (16) ds Stallzylinder aufweist, wobei der Vorschubantrieb 16 einen in Richtung des Metallstranges (1) verlaufenden, an der Stirnseite des zu entgratenden Endes (18) des abgelängten Metallstranges (1) angreifenden Stempel (15) für den durch die ringförmige Halterung (6) an den Stempel (15) anschlagenden, abgelängten Metallstrang (1) aufweist.

2. Vorrichtung nach Anspruch 1, **dadurch gekennzeichnet, dass** der mit Hilfe eines Stellzylinders (16) beaufschlagbare Stempel (15) einen Bremsanschlag für den abgelängten Metallstrang (1) bildet.

3. Vorrichtung nach einem der Ansprüche 1 oder 2, **dadurch gekennzeichnet, dass** die Halterung (6) wenigstens zwei Halterungsringe (8) für je einen Satz von Hobelwerkzeugen (7) aufweist.

4. Vorrichtung nach Anspruch 3, **dadurch gekennzeichnet, dass** die Halterungsringe (8) mit Hilfe einer axialen Spanneinrichtung (9) an einem Widerlager (11) eines der Höhe nach in einem Gestell (2) verstellbaren Schlittens (3) festklemmbar sind.

## Claims

1. Device for deburring a metal strip (1) cross-cut by a flame-cutting process, with planing tools (7) which are mounted in a holder (6) so as to be independently adjustable transverse to the metal strip (1), and with a drive for relative forward movement of the planing tools (7) with respect to the cross-cut metal strip (1), **characterised in that** the annular holder (6) includes at least two sets - disposed one behind the other in the longitudinal direction of the cross-cut metal strip (1) - of planing tools (7) which can be adjusted radially with respect to the cross-cut metal strip (1) and which are staggered with respect to each other in sets, and that the device has a forward drive (16) for the operating cylinder, wherein the forward drive (16) has a plunger (15) - which extends in the direction of the metal strip (1) and engages the end face of the end (18) of the cross-cut metal strip (1) which is to be deburred - for the cross-cut metal strip (1) which strikes against the plunger (15) through the annular holder (6).

2. Device as claimed in claim 1, **characterised in that** the plunger (15) which can be actuated with the aid of an operating cylinder (16) forms a brake stop for the cross-cut metal strip (1).

3. Device as claimed in any one of claims 1 or 2, **characterised in that** the holder (6) has at least two holder rings (8) for a respective set of planing tools (7).

4. Device as claimed in claim 3, **characterised in that** with the aid of an axial clamping device (9) the holder rings (8) can be fixedly clamped to a counter bearing (11) of a carriage (3) which can be adjusted in terms of height in a frame (2).

## Revendications

1. Dispositif d'ébavurage d'un tronçon métallique (1) coupé à longueur par oxycoupage à l'aide d'outils de rabotage (7), montés de manière réglable, chacun pour soi transversalement au tronçon métallique (1), dans une fixation (6), et avec un dispositif d'entraînement pour assurer le déplacement d'avancement relatif des outils de rabotage (7) par rapport au tronçon métallique (1) coupé à longueur, **caractérisé en ce que** la fixation (6) en forme d'anneau comprend au moins deux jeux, disposés l'un derrière l'autre dans la direction longitudinale du tronçon métallique (1) coupé à longueur, d'outils de rabotage (7) réglables radialement par rapport au tronçon métallique (1) coupé à longueur, décalés par jeu en chicane, l'un par rapport à l'autre, et **en ce que** le dispositif comporte un dispositif d'entraînement d'avancement (16) réalisé sous forme de vérin d'actionnement, dans lequel le dispositif d'entraînement d'avancement (16) comporte un mandrin (15), s'étendant dans la direction du tronçon métallique (1), agissant sur la face frontale de l'extrémité (18) à ébavurer du tronçon métallique (1) coupé à longueur, pour le tronçon métallique (1) coupé à longueur venant en butée sur le mandrin (15) à travers la fixation (6) en forme d'anneau.

2. Dispositif selon la revendication 1, **caractérisé en ce que** le mandrin (15), susceptible d'être sollicité à l'aide d'un vérin d'actionnement (16), forme une butée de freinage pour le tronçon métallique (1) coupé à longueur.

3. Dispositif selon l'une des revendications 1 ou 2, **caractérisé en ce que** la fixation (6) comporte au moins deux anneaux de fixation (8), chacun pour un jeu d'outils de rabotage (7).

4. Dispositif selon la revendication 3, **caractérisé en ce que** les anneaux de fixation (8) sont susceptibles d'être bloqués à l'aide d'un dispositif de bridage axial (9), sur un contre-palier (11) d'un chariot (3) réglable en hauteur dans un bâti (2).
